# EUROPEAN PATENT SPECIFICATION

(11) **EP 3 671 533 B1**
(45) Date of publication and mention of the grant of the patent: **11.10.2023**
(21) Application number: 18214009.5
(22) Date of filing: 19.12.2018
(51) Int. Cl.: G06V 20/20, G06V 20/56, G06V 40/10, G06T 19/00

(54) **VEHICLE WITH A CAMERA-DISPLAY-SYSTEM AND METHOD FOR OPERATING THE VEHICLE**
FAHRZEUG MIT EINEM KAMERADISPLAYSYSTEM UND VERFAHREN ZUM BETREIBEN DES FAHRZEUGS
VÉHICULE ÉQUIPÉ D'UN SYSTÈME D'AFFICHAGE DE CAMÉRA ET PROCÉDÉ DE FONCTIONNEMENT DU VÉHICULE

(43) Date of publication of application: 24.06.2020
(73) Proprietor: AUDI AG, 85045 Ingolstadt (DE); LG Electronics Inc., Youngdungpo-gu Seoul 150-721 (KR)
(72) Inventor: DIBOINE, Romain, Seocho-gu Seoul (KR); KIM, Doh yeon, Seocho-Gu Seoul 06772 (KR); KIM, Seonghwan, Gangseo-gu, Seoul (KR); MERTENS, Joris, 85051 Ingolstadt (DE); RITTGER, Lena, 85051 Ingolstadt (DE)
(74) Representative: Hofstetter, Schurack & Partner

(56) References cited:
- EP-A1- 2 608 153
- US-A1- 2003 095 080
- US-B1- 10 052 026
- Ron Smith: "jaguar land rover 360 virtual urban windscreen uses heads-up display", , 16 December 2014 (2014-12-16), pages 1-8, XP055584283, Retrieved from the Internet: URL:https://www.designboom.com/technology/ jaguar-land-rover-360-virtual-urban-windsc reen-12-16-2014/ [retrieved on 2019-04-29]
- Hutschings ET AL: "The Aeon Project: AR & Virtual Reality In Vehicles via PSFK", , 3 August 2011 (2011-08-03), pages 1-5, XP055021769, Retrieved from the Internet: URL:http://www.psfk.com/2011/08/the-aeon-p roject-ar-virtual-reality-in-vehicles.html [retrieved on 2012-03-13]
- PHILIPP HOCK ET AL: "CarVR", PROCEEDINGS OF THE 2017 CHI CONFERENCE ON HUMAN FACTORS IN COMPUTING SYSTEMS , CHI '17, ACM PRESS, NEW YORK, NEW YORK, USA, 2 May 2017 (2017-05-02), pages 4034-4044, XP058337783, DOI: 10.1145/3025453.3025665 ISBN: 978-1-4503-4655-9
- MIAOLONG YUAN ET AL: "A mixed reality system for virtual glasses try-on", PROCEEDINGS OF THE 10TH INTERNATIONAL CONFERENCE ON VIRTUAL REALITY CONTINUUM AND ITS APPLICATIONS IN INDUSTRY, VRCAI '11, 1 January 2011 (2011-01-01), page 363, XP055158336, New York, New York, USA DOI: 10.1145/2087756.2087816 ISBN: 978-1-45-031060-4

## Description

The invention is concerned with a vehicle comprising a camera-display-system. A field-of-view of a camera of the system is directed to a region which is called "viewing region" in the sequel. A display device of the system is also facing this viewing region, i.e. the display device is designed to display at least one output image to the viewing region. The at least one output image is generated on the basis of at least one camera image generated by the camera. Thus, if a person is standing inside the viewing region facing the camera, this same person will be able to see itself on the display device. In other words, the camera-display-system constitutes an electronic mirror which a person may use for regarding himself or herself.

A vehicle comprising such an electronic mirror is described in US 2016/0082888 A1. According to that document, a vehicle sun visor system may comprise a touchscreen and a camera in a so-called "see-me" arrangement that is a person sitting in a vehicle seat looking at the sun visor system will be filmed by the camera and a display integrated in the sun visor system will show the camera images to the person sitting in the vehicle seat. With the known system the person will only see the pure camera images without any additional information.

A mechanical system for arranging a tablet-PC in a vehicle is described in DE 10 2016 209 168 A1. By arranging a tablet-PC in the vehicle and using the front camera of the tablet-PC, an electronic mirror function could be implemented in the vehicle. However, no link to additional information would be provided.

Document DE 10 2013 009 580 A1 illustrates a vehicle infotainment system that may integrate a tablet-PC such that the tablet-PC may receive additional information from a central storage of the vehicle such as video data for viewing a movie. The tablet-PC may also comprise a camera which may be used for video conferencing. An electronic mirror function is not described in that document.

US 10 052 026 B1 illustrates a smart mirror for virtual try-on of products that depend on a geographical location albeit not being implemented in a vehicle.

It is an object of the present invention to provide an enhanced electronic-mirror functionality in a vehicle.

The object is achieved by the subject matter of the independent claims. Advantageous further embodiments are described in the dependent claims, the following description and the drawings.

The invention provides a vehicle with a camera-display system. The system provides a combination of a camera and a display device. A field-of-view of the camera is directed to the already mentioned viewing region. This region may be arranged inside or outside the vehicle. In other words, the field of view of the camera may be directed to a viewing region inside the vehicle or a viewing region outside the vehicle, for example a region in front of a door of the vehicle. The display device of the system is designed to display at least one output image to the viewing region. In other words, while a person is standing in the viewing region, the camera may film the person while at the same time the person may view or watch the at least one output image on the display device. The at least one output image is based on at least one camera image generated by the camera. This results in the electronic-mirror functionality in that the person can see itself on the display device. The camera and the display are preferably facing into the same direction such that a person facing the camera will also see his or her face in the display.

In order to enhance this functionality, an image processing unit of the system is designed to receive the at least one camera image from the camera. In other words, the camera images are not displayed directly on the display. The image processing unit is further designed to perform an object recognition for detecting at least one person in the at least one camera image and to generate the at least one output image on the basis of the at least one camera image by overlaying a predefined image content in the at least one camera image for manipulating an appearance of at least one body part of the at least one person in the at least one output image. In other words, the camera and the display device are connected or linked via an image processing unit that manipulates the at least one camera image and forwards the respective manipulated camera image as a respective output image to the display device. The manipulation is done in the way that in the at least one output image the at least one person has a different appearance compared to what the person actually looks like. This is done by adding image content that is overlaid over the image of the at least one person. In the at least one output image, the image pixels that represent the mentioned at least one body part, for example the face or the torso or a hand, are manipulated or overlaid by image pixels of the additional image content. For example, the image content may picture or represent a garment (like a hat or a dress), such that in the at least one output image a person may be shown wearing that garment although the actual person standing in the viewing region is not wearing that garment at all. For detecting the at least one object in the at least one camera image, an object recognition algorithm as known from the prior art may be used.

The invention provides the advantage that in the vehicle the camera-display system provides an augmented reality functionality to a person looking at the system. This may support a person in different situations. For example, in the case of using an authorization functionality when entering the vehicle: For example for a biometric face identification, when the person has to look into the camera, the camera-display system may provide guidance lines as the additional image content overlaid over the camera image of the face of the person such that the person may be informed how to position the face and/or where to position the eyes.

The vehicle comprises a radio communication module that is designed to receive the described additional image content from at least one external data server. Such a radio communication module may be based on a mobile communication module and/or a WIFI module. The image content shows a product that is designed to be carried at and/or worn on the already mentioned at least one body part. For example, such a product may be a pair of glasses or said garment or a ring for a finger. The at least one external data server can be, for example, a shopping server for selling the product. Thus, the vehicle may be used as a platform for selling the product. If the viewing region is inside the vehicle, a person may do the shopping from inside the vehicle. If the viewing region is arranged outside the vehicle, the vehicle may be used for offering the product to at least one person passing by the vehicle.

The vehicle comprises a locating device for determining a current geo-position of the vehicle. Such a locating device can be a receiver for a position signal of a GNSS (global navigation satellite system), e.g. the GPS (global positioning system). The vehicle is designed to signal the current geo-position over the said radio communication module to the at least one data server for receiving a location-specific image content. In other words, the image content that is overlaid over the content of the at least one camera image depends on or is a function of the current geo-position of the vehicle. To this end, the at least one data server may receive the geo-position of the vehicle and may choose the image content from several different image contents as a function of the received geo-position data. This provides the advantage that the image content may be adapted to the environment that the vehicle is currently in.

The invention also comprises additional embodiments that provide further advantages.

In one embodiment the viewing region is arranged outside the vehicle and the display device is designed to display the at least one output image in a window (for example a side window) and/or on an outside surface of the vehicle (for example on a part of a door or sidewall of the vehicle). Thus, a person standing next to the vehicle may use the camera-display system as an electronic mirror with augmented-reality functionality. If the display device is arranged in a window of the vehicle, a person may look at the window from outside the vehicle and may see himself or herself in the display device with the additional image content added to the at least one camera image. Alternatively, the viewing region may be arranged inside the vehicle at at least one driver seat and/or at least one passenger seat of the vehicle. In other words, the camera may be facing the at least one driver seat and/or the at least one passenger seat. A person sitting in such a seat may therefore observe himself or herself in the display device while sitting on the seat.

In one embodiment the display device comprises a transparent pixel matrix as a layer on a window screen and/or on a transparent carrier element. A transparent pixel matrix can be provided on the basis of OLED (organic light emitting diode), which is called tOLED (transparent OLED). A transparent carrier element may be arranged, for example, on a dashboard of the vehicle. As a material, glass or a transparent polymer may be suitable. Thus, when the pixel matrix is deactivated, i.e. no output image is shown, a person may view objects behind the carrier element, for example the surrounding traffic. When the pixel matrix is activated for displaying the at least one output image, the person may view or focus on the carrier element and regard the at least one output image.

In one embodiment the vehicle may adapt the image content to the environment by itself. To this end, the image processing unit is designed to choose the image content out of several image contents as a function of a current environment that the vehicle is in (as may be detected on the basis of a digital map and/or a sensor input from an environment sensor). Additionally or alternatively the image content may be chosen as a function of a shop in front of or near which the vehicle is parked. This may be determined on the basis of the current geo-position of the vehicle and/or the vehicle may receive an identification signal or content data describing the image content from a shop or a computer server associated with the shop. The term "near" means less than 500 m, especially less than 250 m away. Additionally or alternatively the image content may be chosen as a function of a driving situation. Such a driving situation may be one out of e.g. driving on a highway, driving overland, driving through a town, a parking phase. Additionally or alternatively the image content may be chosen as a function of a driving destination as signaled by a navigation system. For example, the driving destination may be programmed by a user or may be estimated by the navigation system on the basis of the current driving situation.

The described image content for overlaying may be described by content data. The image content may picture or represent at least one object that is graphically overlaid over the at least one person as pictured in the at least one camera image. The overlay can be achieved by replacing corresponding image pixels in the at least one camera image and/or by the so-called alpha-blending. The image content may depict at least one object, for example a garment or an accessory that may be worn or carried by a person. In one embodiment the image processing unit is designed to detect a shape of the at least one body part whose appearance is to be changed on the basis of the additional image content. Once the shape is estimated or determined, the image processing unit may deform or warp a shape of an object represented by the image content for adapting the shape of the object to the shape of the at least one body part. The object that is represented or pictured by the image content may be, for example, a dress or a garment in general. If the shape of the body part of at least one person is estimated and the shape of the pictured garment is adapted to the shape of the body part, overlaying the adapted shape of the garment will provide a better fit to the shape of the respective body part. This provides a more realistic result of the overlay. The technology for adapting the shape of an object that is represented by image content data, is the so-called warping. Corresponding algorithms are available in the prior art.

In one embodiment the image processing unit is designed to replace a background scenery in the at least one camera image by a predefined artificial scenery in the at least one output image. The background scenery is that part of the at least one camera image, that surrounds the at least one person pictured in the at least one camera image. Thus, in addition to changing the appearance of the at least one body part of the at least one person, the at least one person can also be pictured in a different, artificial scenery in the at least one output image. For example, if a child is looking at the display device while standing or sitting in the viewing region, the child may be pictured in an artificial scenery, for example a jungle, while sitting in the vehicle. Thus, the child can be distracted or entertained.

In one embodiment the image processing unit is designed to provide a screenshot functionality by storing the at least one output image and/or sending the at least one output image to a predefined internet server, if a predefined user input is received. In other words, the user may trigger or demand the storing and/or sending of the at least one output image. Thus, the user may preserve the at least one output image with the appearance of the at least one body part of the at least one person manipulated or changed on the basis of the image content added by the image processing unit.

By operating the inventive vehicle, a method is performed which is also part of the invention. The method is for operating a camera-display system of a vehicle. As has already been described, a field-of-view of a camera of the system is directed to a viewing region and a display device of the system displays at least one output image to the viewing region. The at least one output image is based on at least one camera image generated by the camera. However, the at least one output image is not identical to the at least one camera image. Instead, an image processing unit of the system receives the at least one camera image from the camera and performs an object recognition for detecting at least one person in the at least one camera image and generates the at least one output image on the basis of the at least one camera image by overlaying a predefined image content in the at least one camera image for manipulating an appearance of at least one body part of the at least one detected person in the at least one output image. Thus, an electronic mirror can be provided on the basis of the camera-display system with the additional functionality of augmenting the scenery shown in the at least one camera image.

A communication module of the vehicle receives the image content from at least one external data server, wherein the image content shows a product to be carried at and/or worn on the at least one body part, and a locating device of the vehicle determines a current geo-position of the vehicle. The vehicle signals the current geo-position over the communication module to the at least one data server for receiving location specific image content.

The method also comprises additional embodiments which provide features that have already been described in connection with the embodiments of the vehicle. Therefore, the features of the corresponding embodiments of the method are not described here again.

The invention also comprises the combinations of the features of the described embodiments.

In the following an exemplary implementation of the invention is described. The figures show:
- Fig. 1: a schematic illustration of a vehicle according to the invention;
- Fig. 2: a schematic illustration of a camera-display system of the vehicle of Fig. 1 with a viewing regional arranged outside the vehicle;
- Fig. 3: a schematic illustration of a camera-display system of the vehicle with a viewing region arranged inside the vehicle; and
- Fig. 4: a schematic illustration of a camera-display system that is displaying an output image with a manipulated background scenery.

The embodiment explained in the following is a preferred embodiment of the invention. However, in the embodiment, the described components of the embodiment each represent individual features of the invention which are to be considered independently of each other and which each develop the invention also independently of each other and thereby are also to be regarded as a component of the invention in individual manner or in another than the shown combination. Furthermore, the described embodiment can also be supplemented by further features of the invention already described.

In the figures identical reference signs indicate elements that provide the same function.

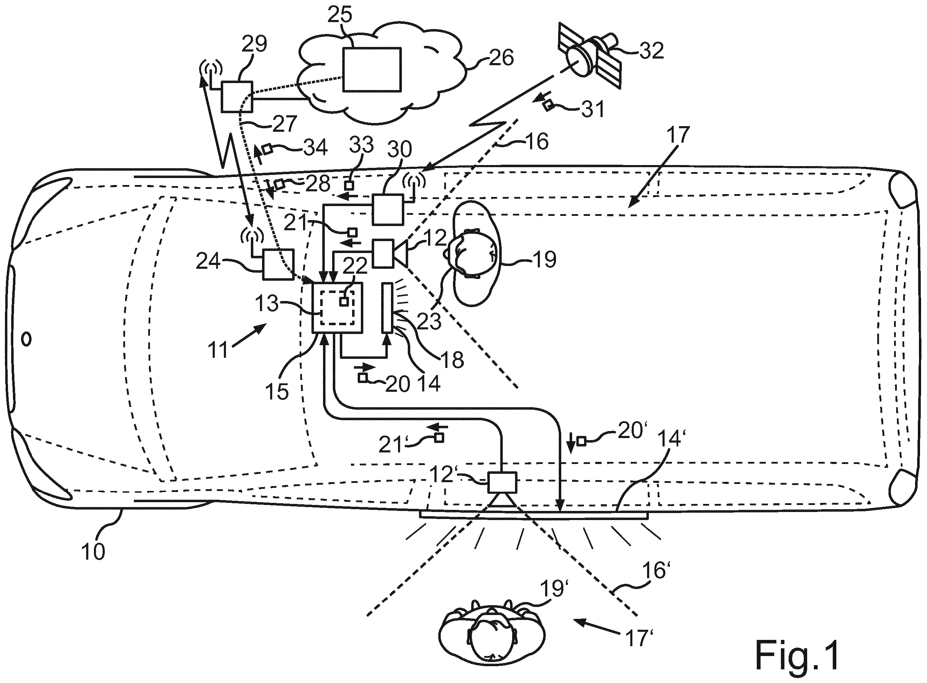

Fig. 1 shows a top view of a motor vehicle 10, which can be, for example, a passenger vehicle or a van. The vehicle 10 may comprise a camera-display system 11 comprising of a camera 12, an image processing unit 13 and a display device 14. The image processing unit 13 can be a program module or software module that may be operated by an electronic control unit 15. Camera 12 may be arranged in the vehicle 10 in such a way that a field of view 16 of the camera 12 may be directed towards a viewing region 17 inside vehicle 10. Display device 14 may be arranged in a similar way that a viewing side or display side 18 of display device 14 may be facing towards the viewing region 17. Thus, a person 19 in viewing region 17 may regard display device 14 such that person 19 may see at least one output image 20 displayed on the viewing side 18 of display device 14 while at the same time camera 12 may generate at least one camera image 21 of the person 19 standing or sitting in the viewing region 17. The at least one output image 20 may be based on the at least one camera image 21. The at least one camera image 21 may be received by the image processing unit 13 and a predefined image content 22 may be overlaid over the at least one camera image 21 for generating the at least one output image 20. As person 19 is inside the viewing region 17, the at least one output image 20 will show person 19 however with the appearance of at least one body part 23 of person 19 being manipulated in its appearance due to the overlaid image content 22. For example, the body part 23 can be the face of person 19 and the image content 22 can be an image of glasses such that the at least one output image 20 may show person 19 wearing glasses although in reality person 19 is not wearing glasses at all.

Additionally or alternatively, the camera-display system 11 may comprise a camera 12' and a display device 14' both of which may be facing towards a viewing region 17' outside vehicle 10. Accordingly, a person 19' outside vehicle 10 is inside the field of view 16' of camera 12' when standing in the viewing region 17' while at the same time person 19' may view at least one output image 20' on display device 14'. Camera 12' may generate at least one camera image 21' of person 19' and the image processing unit 13 may overlay the image content 22 over the at least one camera image 21' or generating the at least one output image 20' which may be displayed by display device 14' to the viewing region 17.

Camera 12 may be arranged next to display device 14, for example above or below or at a side of display device 14. Camera 12' may be arranged next to display device 14', for example above or below or at a side. This provides a good electronic mirror effect in that the viewing angle of camera 12, 12' on the respective person 19, 19' will generate the output image in such a way that it is very similar to a viewing angle of person 19, 19' onto a real mirror. Preferably, a distance between the respective camera 12 and display device 14 is smaller than 1 m, preferably smaller than 50 cm. The distance between camera 12' and display device 14' is preferably smaller than 1 m, in particular smaller than 50 cm. Preferably, the image plane of an image sensor of the camera and the image plane of the display have a distance in the direction perpendicular to the image plane of the display that is smaller than one meter, preferably smaller than 50 cm.

Image content 22 may be received over a radio communication module 24, which can be, for example, a mobile communication module (GSM, UMTS, 5G), or a WIFI module. Communication module 24 may be linked to at least one data server 25, which can be, for example, a shopping server for internet shopping. Data server 25 can be part of the internet 26. A communication link 27 between communication module 24 and data server 25 for transferring image content data 28 for defining image content 22 can lead over a mobile communication network 29 in the case that communication module 24 is a mobile communication module. For defining image content 22 as a function of a current position of vehicle 10, a locating device 30 of vehicle 10 may receive a position signal 31 from a GNSS 32, for example the GPS. Control unit 15 may signal geo-position data 33 indicating the current position of vehicle 10 from locating device 30 and may signal the geo-position 34 as described by geo-position data 33 to the data server 25. Data server 25 may then choose the image content data 28 as a function of the geo-position 34. Thus, the image content 22 used for generating the at least one output image 20, 20' may be dependent on the geo-position 34 of vehicle 10. For example, if vehicle 10 is parked in front of a specific shop, the image content 22 can be related to a product sold in the shop. Thus, display device 14, 14' may be used for advertising the product to persons 19 ,19'.

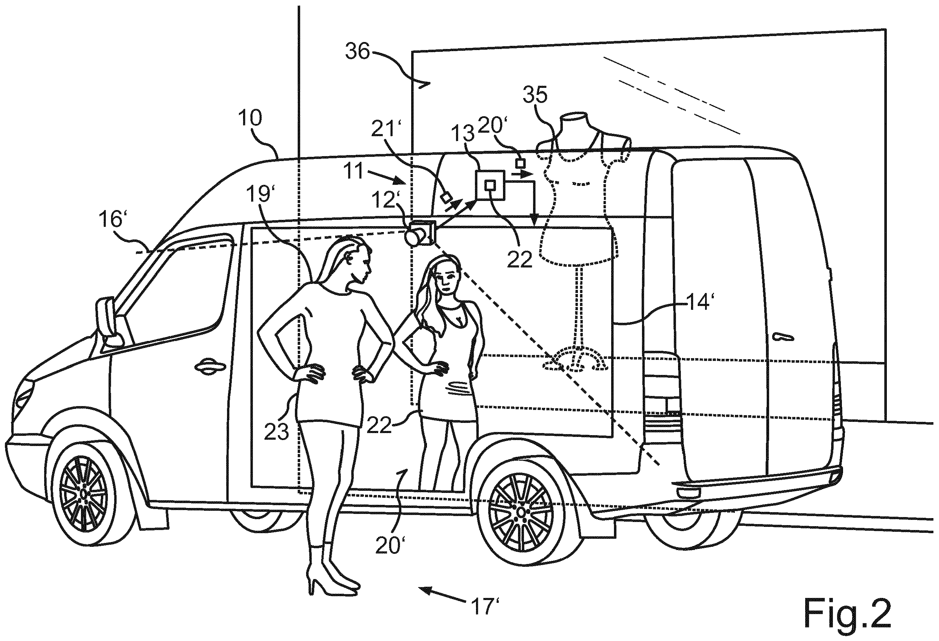

Fig. 2 shows a perspective view of an embodiment of vehicle 10 with a camera-display system 11 for displaying to a viewing region 17' outside vehicle 10. For example, camera-display system 11 may provide a display device 14' at a side or laterally of vehicle 10. The example shows how a person 19' may be filmed or captured by camera 12' as the field of view 16' of camera 12' covers viewing region 17'. As an image content 22, image processing unit 13 may overlay an image of an object, for example a dress, over the at least one camera image 21' of person 19' standing in viewing region 17'. The image processing unit 13 may recognize the presence and/or contour and/or shape of at least one person 19' and may segment or recognize a body part 23, for example the torso. Then, the image content 22 can be overlaid at a correct position such that in the at least one output image 20', person 19' is pictured with the image content 22 overlay, such that for example a product, for example a garment and/or an accessory, is overlaid over the camera image 21' of person 19'. The appearance of the at least one body part 23 is thus changed. In the example of Fig. 2, person 19' appears to be wearing a dress that is the image content 22. Image processing unit 13 may also detect a shape of the at least one or depart 23 such that the image content 22 may be warped or adapted in shape to fit the shape of the body part 23. This makes the at least one output image 23 look more realistic.

The image content 22 may be received from data server 25 as has been described in connection with Fig. 1. Thus, image content 22 may describe or picture a product 35 of a shop 36 in a predefined neighborhood or distance to vehicle 10, for example in a distance of maximum of 500 m, preferably 200 m.

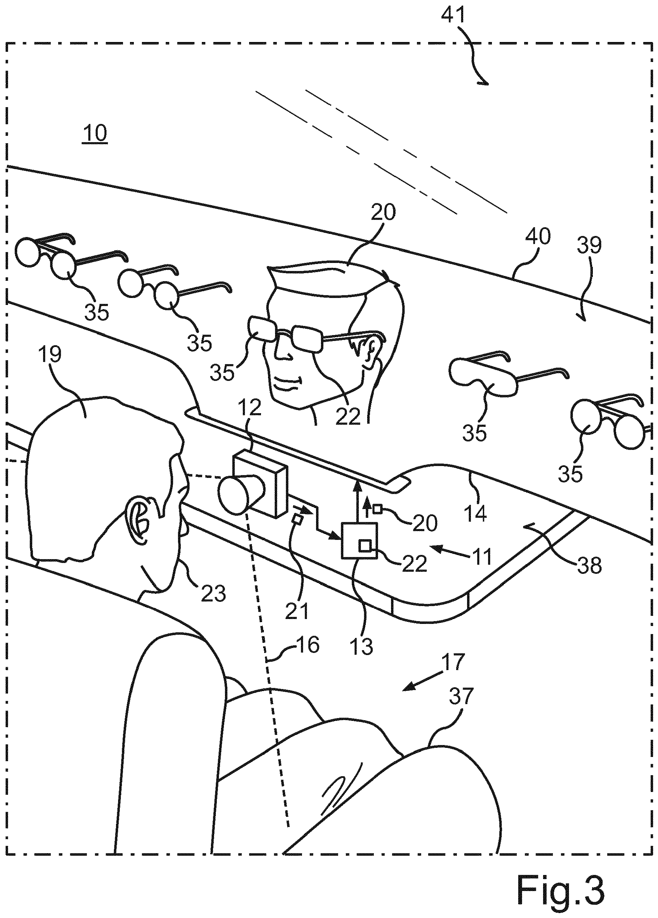

Fig. 3 illustrates a camera-display system 11 that may be arranged inside an embodiment of vehicle 10. A viewing region 17 may be arranged at a seat 37, for example a driver seat or a passenger seat. The field of view 16 of camera 12 may be directed to seat 37 such that a person 19 sitting in seat 37 may be filmed by camera 12 and camera images 21 may be processed by image processing unit 13 to generate the at least one output image 20 for display device 14. Display device 14 can be, for example arranged on a dashboard 38 of vehicle 10. Display device 14 may be based on a transparent pixel matrix 39 on a transparent carrier element 40, for example a screen or a glass panel. Pixel matrix 39 deactivated, person 19 may look through wind screen 41. With pixel matrix 39 activated, the at least one output image 20 may be displayed, showing person 19 as filmed by camera 12 with the image content 22 overlaid over at least one body part, for example the face. Thus, an image of a product 35, for example glasses, may be overlaid over the at least one body part 23, for example the face, as shown in Fig. 3. Thus, person 19 may view the appearance with the product 35. The person 19 can thus experiment with changing between different product 35.

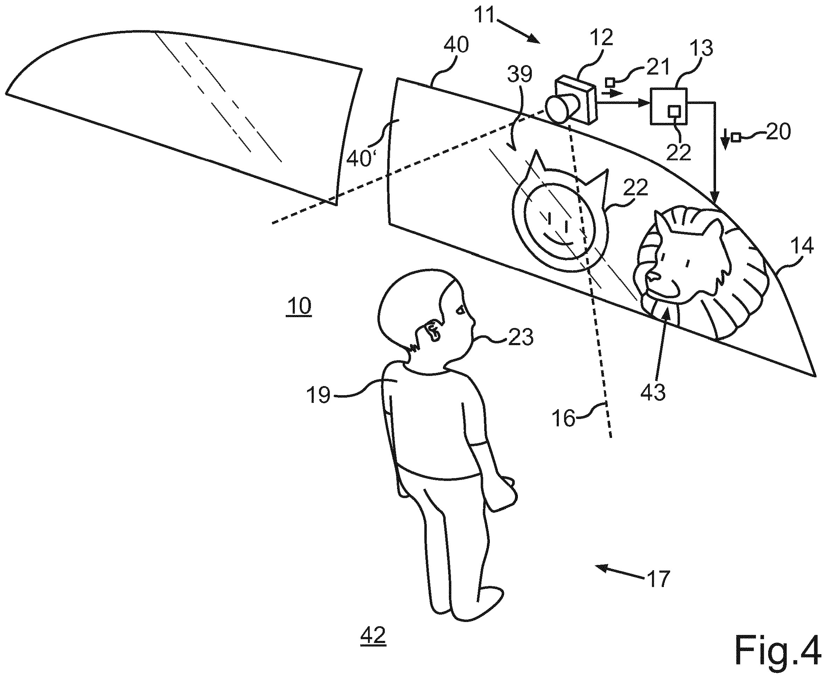

Fig. 4 illustrates an embodiment with a camera-display system 11 where display device 14 is based on a transparent pixel matrix 39 on a transparent carrier element 40 that may be based on a window screen of a window 40' of vehicle 10. The viewing region 17 of camera-image system 11 may be inside or outside vehicle 10. If viewing region 17 is outside vehicle 10, a person 19, for example a child, may be animated to approach and/or enter vehicle 10. A viewing region 17 inside vehicle 10 may provide the advantage that a person 19, for example a child, may be entertained during a drive of vehicle 10. As is shown, image content 22 may be used to change or manipulate the appearance of a body part 23. Fig. 4 additionally illustrates that a background scenery 42 of person 19 as it may be imaged or pictured in the at least one camera image 21 may be replaced by an artificial scenery 43 that is different from the real background scenery 42.

The camera-display system 11 may also be used for an authentication functionality of vehicle 10 that may be performed during the entering of vehicle 10. For example, the at least one output image 20 may signal where person 19 may have to place his or her head or face for a authentication routine, for example a biometric feature recognition.

By overlaying image content 22 over the at least one camera image 21 for generating the at least one output image 20, the camera-display system 11 provides at least one augmented camera image in display device 14. By choosing image content 22, the augmentation can be provided for at least one of the following use cases:
Animations and entertaining presentations for children, for example comic characters, that make entering the vehicle attractive and/or entertain a child during a drive.

Visualization in the context of shopping, for example the presentation of a product, for example clothes and/or accessories worn at the body of the customer or person (Fig. 2 und Fig. 3). This can be performed for products already bought or for an online-shopping product.

This may support a person when deciding which product to shop.

The system provides a camera and an image processing unit 13 for example with an augmented reality algorithm, and a display device. The camera and the display device may be arranged in such a way, that the viewing region is arranged outside the vehicle or inside the vehicle. Over a communication link, for example an internet link, it is also possible to share a screenshot, that is at least one of the at least one output image 20, online.

For detecting at least one person 19 in the at least one camera image 21, an algorithm as available in the prior art may be used.

Overall, the example shows how a smart electronic mirror may be provided by the invention.

## Claims

1. Vehicle (10) with a camera-display system (11), wherein a field-of-view (16, 16') of a camera (12, 12') of the system (11) is directed to a viewing region (17, 17') and a display device (14, 14') of the system (11) is designed to display at least one output image (20, 20') to the viewing region (17, 17'), wherein the at least one output image (20, 20') is based on at least one camera image (21, 21') generated by the camera (12, 12'), wherein
an image processing unit (13) of the system (11) is designed to receive the at least one camera image (21, 21') from the camera (12, 12') and to perform an object recognition for detecting at least one person (19, 19') in the at least one camera image (21, 21') and to generate the at least one output image (20, 20') on the basis of the at least one camera image (21, 21') by overlaying a predefined image content (22) of the at least one camera image (21, 21') for manipulating an appearance of at least one body part (23) of the at least one detected person (19, 19') in the at least one output image (20, 20'), wherein
the vehicle (10) comprises
- a communication module (24) that is designed to receive the image content (22) from at least one external data server (25), wherein the image content (22) shows a product (35) to be carried at and/or worn on the at least one body part (23), and
- a locating device (30) for determining a current geo-position (34) of the vehicle (10) and
the vehicle (10) is designed to signal the current geo-position (34) over the communication module (24) to the at least one data server (25) for receiving location specific image content (22), and whereby the output image content depends on the received geo-position data.

2. Vehicle (10) according to claim 1, wherein the viewing region (17') is arranged outside the vehicle (10) and the display device (14') is designed to display the at least one output image (20') in a window (40') and/or on an outside surface of the vehicle (10) or wherein the viewing region (17) is arranged inside the vehicle (10) at at least one driver seat (37) and/or at least one passenger seat (37) of the vehicle (10).

3. Vehicle (10) according to any of the preceding claims, wherein the display device (14, 14') comprises a transparent pixel matrix (39) as a layer on a window (40') and/or on a transparent carrier element (40).

4. Vehicle (10) according to any of the preceding claims, wherein the image processing unit (13) is designed to choose the image content (22) out of several image contents as a function of
- a current environment that the vehicle (10) is in and/or
- a shop (36), if the vehicle is parked in front of the shop (36) or within a predefined distance of the shop (36) , and/or
- a driving situation and/or
- a driving destination as signaled by a navigation system.

5. Vehicle (10) according to any of the preceding claims, wherein the image processing unit (13) is designed to detect a shape of the at least one body part (23) and to deform a shape of an object represented by the image content (22) for adapting the shape of the object to the shape of the at least one body part.

6. Vehicle (10) according to any of the preceding claims, wherein the image processing unit (13) is designed to replace a background scenery (42) of the at least one camera image (21, 21') by a predefined artificial scenery (43) in the at least one output image (20, 20').

7. Vehicle (10) according to any of the preceding claims, wherein the image processing unit (13) is designed to provide a screenshot functionality by storing the at least one output image (20, 20') and/or by sending the at least one output image (20, 20') to a predefined internet server, if a predefined user input is received.

8. Method for operating a camera-display system (11) of a vehicle (10), wherein a field-of-view (16, 16') of a camera (12, 12') of the system (11) is directed to a viewing region (17, 17') and a display device (14, 14') of the system (11) displays at least one output image (20, 20') to the viewing region (17, 17'), wherein the at least one output image (20, 20') is based on at least one camera image (21, 21') generated by the camera (12, 12'), wherein
an image processing unit (13) of the system (11) receives the at least one camera image (21, 21') from the camera (12, 12') and performs an object recognition for detecting at least one person (19, 19') in the at least one camera image (21, 21') and generates the at least one output image (20, 20') on the basis of the at least one camera image (21, 21') by overlaying a predefined image content (22) for manipulating an appearance of at least one body part (23) of the at least one detected person (19, 19') in the at least one output image (20, 20'),
wherein
- a communication module (24) of the vehicle (10) receives the image content (22) from at least one external data server (25), wherein the image content (22) shows a product (35) to be carried at and/or worn on the at least one body part (23), and
- a locating device (30) of the vehicle (10) determines a current geo-position (34) of the vehicle (10) and
- the vehicle (10) signals the current geo-position (34) over the communication module (24) to the at least one data server (25) for receiving location specific image content (22), and whereby the output image content depends on the received geo-position data.

## Patentansprüche

1. Fahrzeug (10) mit einem Kameraanzeigesystem (11), wobei ein Sichtfeld (16, 16') einer Kamera (12, 12') des Systems (11) auf eine Sichtregion (17, 17') gerichtet ist, und eine Anzeigevorrichtung (14, 14') des Systems (11) dazu ausgelegt ist, mindestens ein Ausgabebild (20, 20') in die Sichtregion (17, 17') anzuzeigen, wobei das mindestens eine Ausgabebild (20, 20') auf mindestens einem Kamerabild (21, 21') basiert, das durch die Kamera (12, 12') erzeugt wird, wobei
eine Bildverarbeitungseinheit (13) des Systems (11) dazu ausgelegt ist, das mindestens eine Kamerabild (21, 21') von der Kamera (12, 12') zu empfangen und eine Objekterkennung zum Detektieren mindestens einer Person (19, 19') in dem mindestens einen Kamerabild (21, 21') durchzuführen und das mindestens eine Ausgabebild (20, 20') auf der Basis des mindestens einen Kamerabildes (21, 21') durch Überlagern eines vordefinierten Bildinhalts (22) des mindestens einen Kamerabildes (21, 21') zum Manipulieren eines Erscheinungsbildes mindestens eines Körperteils (23) der mindestens einen detektierten Person (19, 19') in dem mindestens einen Ausgabebild (20, 20') zu erzeugen,
wobei das Fahrzeug (10) umfasst
- ein Kommunikationsmodul (24), das dazu ausgelegt ist, den Bildinhalt (22) von mindestens einem externen Datenserver (25) zu empfangen, wobei der Bildinhalt (22) ein an dem mindestens einen Körperteil (23) mitzuführendes und/oder zu tragendes Produkt (35) zeigt, und
- eine Lokalisierungsvorrichtung (30) zum Bestimmen einer aktuellen Geoposition (34) des Fahrzeugs (10), und
das Fahrzeug (10) dazu ausgelegt ist, die aktuelle Geoposition (34) über das Kommunikationsmodul (24) an den mindestens einen Datenserver (25) zum Empfangen eines ortsspezifischen Bildinhalts (22) zu signalisieren, und wodurch der Ausgabebildinhalt von den empfangenen Geopositionsdaten abhängt.

2. Fahrzeug (10) nach Anspruch 1, wobei die Sichtregion (17') außerhalb des Fahrzeugs (10) angeordnet ist und die Anzeigevorrichtung (14') dazu ausgelegt ist, das mindestens eine Ausgabebild (20') in einem Fenster (40') und/oder auf einer äußeren Oberfläche des Fahrzeugs (10) anzuzeigen, oder wobei die Sichtregion (17) innerhalb des Fahrzeugs (10) an zumindest einem Fahrersitz (37) und/oder zumindest einem Beifahrersitz (37) des Fahrzeugs (10) angeordnet ist.

3. Fahrzeug (10) nach einem der vorangehenden Ansprüche, wobei die Anzeigevorrichtung (14, 14') eine transparente Pixelmatrix (39) als Schicht auf einem Fenster (40') und/oder auf einem transparenten Trägerelement (40) umfasst.

4. Fahrzeug (10) nach einem der vorangehenden Ansprüche, wobei die Bildverarbeitungseinheit (13) dazu ausgelegt ist, den Bildinhalt (22) aus mehreren Bildinhalten auszuwählen als Funktion
- einer aktuellen Umgebung, in der sich das Fahrzeug (10) befindet, und/oder
- eines Geschäfts (36), wenn das Fahrzeug vor dem Geschäft (36) oder innerhalb eines vordefinierten Abstandes des Geschäfts (36) geparkt ist, und/oder
- einer Fahrsituation und/oder
- eines Fahrziels, wie durch ein Navigationssystem signalisiert.

5. Fahrzeug (10) nach einem der vorangehenden Ansprüche, wobei die Bildverarbeitungseinheit (13) dazu ausgelegt ist, eine Form des mindestens einen Körperteils (23) zu detektieren und eine Form eines Objekts, das durch den Bildinhalt (22) dargestellt ist, zum Anpassen der Form des Objekts an die Form des mindestens einen Körperteils zu verformen.

6. Fahrzeug (10) nach einem der vorangehenden Ansprüche, wobei die Bildverarbeitungseinheit (13) dazu ausgelegt ist, eine Hintergrundszenerie (42) des mindestens einen Kamerabildes (21, 21') durch eine vordefinierte künstliche Szenerie (43) in dem mindestens einen Ausgabebild (20, 20') zu ersetzen.

7. Fahrzeug (10) nach einem der vorangehenden Ansprüche, wobei die Bildverarbeitungseinheit (13) dazu ausgelegt ist, durch Speichern des mindestens einen Ausgabebildes (20, 20') und/oder durch Senden des mindestens einen Ausgabebildes (20, 20') zu einem vordefinierten Internetserver, falls eine vordefinierte Benutzereingabe empfangen wird, eine Screenshot-Funktionalität bereitzustellen.

8. Verfahren zum Betreiben eines Kameraanzeigesystems (11) eines Fahrzeugs (10), wobei ein Sichtfeld (16, 16') einer Kamera (12, 12') des Systems (11) auf eine Sichtregion (17, 17') gerichtet wird und eine Anzeigevorrichtung (14, 14') des Systems (11) mindestens ein Ausgabebild (20, 20') in den Sichtbereich (17, 17') anzeigt, wobei das mindestens eine Ausgabebild (20, 20') auf mindestens einem Kamerabild (21, 21') basiert, das durch die Kamera (12, 12') erzeugt wird, wobei
eine Bildverarbeitungseinheit (13) des Systems (11) das mindestens eine Kamerabild (21, 21') von der Kamera (12, 12') empfängt und eine Objekterkennung zum Detektieren mindestens einer Person (19, 19') in dem mindestens einen Kamerabild (21, 21') durchführt und das mindestens eine Ausgabebild (20, 20') auf der Basis des mindestens einen Kamerabildes (21, 21') durch Überlagern eines vordefinierten Bildinhalts (22) zum Manipulieren eines Erscheinungsbildes mindestens eines Körperteils (23) der mindestens einen detektierten Person (19, 19') in dem mindestens einen Ausgabebild (20, 20') erzeugt,
wobei
- ein Kommunikationsmodul (24) des Fahrzeugs (10) den Bildinhalt (22) von mindestens einem externen Datenserver (25) empfängt, wobei der Bildinhalt (22) ein an dem mindestens einen Körperteil (23) mitzuführendes und/oder zu tragendes Produkt (35) zeigt, und
- eine Lokalisierungsvorrichtung (30) des Fahrzeugs (10) eine aktuelle Geoposition (34) des Fahrzeugs (10) bestimmt, und
- das Fahrzeug (10) die aktuelle Geoposition (34) über das Kommunikationsmodul (24) an den mindestens einen Datenserver (25) zum Empfangen eines ortsspezifischen Bildinhalts (22) signalisiert, und wodurch der Ausgabebildinhalt von den empfangenen Geopositionsdaten abhängt.

## Revendications

1. Véhicule (10) avec un système d'affichage à caméra (11), dans lequel un champ de vision (16, 16') d'une caméra (12, 12') du système (11) est dirigé vers une zone de vision (17, 17') et un dispositif d'affichage (14, 14') du système (11) est conçu pour afficher au moins une image de sortie (20, 20') sur la zone de vision (17, 17'), la au moins une image de sortie (20, 20') étant basée sur au moins une image de caméra (21, 21') générée par la caméra (12, 12'),
une unité de traitement d'image (13) du système (11) étant conçue pour recevoir la au moins une image de caméra (21, 21') provenant de la caméra (12, 12') et pour effectuer une reconnaissance d'objet pour détecter au moins une personne (19, 19') dans la au moins une image de caméra (21, 21') et pour générer la au moins une image de sortie (20, 20') sur la base de la au moins une image de caméra (21, 21 ') en superposant un contenu d'image prédéfini (22) de la au moins une image de caméra (21, 21') pour manipuler une apparence d'au moins une partie corporelle (23) de la au moins une personne détectée (19, 19') dans la au moins une image de sortie (20, 20'),
le véhicule (10) comportant :
- un module de communication (24) qui est conçu pour recevoir le contenu d'image (22) provenant d'au moins un serveur de données externe (25), le contenu d'image (22) montrant un produit (35) à transporter sur la au moins une partie corporelle (23) et/ou à porter sur celle-ci, et
- un dispositif de localisation (30) pour déterminer une géo-position actuelle (34) du véhicule (10) et
le véhicule (10) étant conçu pour signaler la géo-position actuelle (34) via le module de communication (24) au au moins un serveur de données (25) pour recevoir un contenu d'image spécifique à la localisation (22), et en sorte que le contenu d'image de sortie dépend des données de géo-position reçues.

2. Véhicule (10) selon la revendication 1, dans lequel la zone de vision (17') est agencée à l'extérieur du véhicule (10) et le dispositif d'affichage (14') est conçu pour afficher la au moins une image de sortie (20') dans une fenêtre (40') et/ou sur une surface extérieure du véhicule (10) ou dans lequel la zone de vision (17) est agencée à l'intérieur du véhicule (10) sur au moins un siège conducteur (37) et/ou au moins un siège passager (37) du véhicule (10).

3. Véhicule (10) selon l'une quelconque des revendications précédentes, dans lequel le dispositif d'affichage (14, 14') comporte une matrice de pixels transparente (39) sous la forme d'une couche sur une fenêtre (40) et/ou sur un élément de support transparent (40).

4. Véhicule (10) selon l'une quelconque des revendications précédentes, dans lequel l'unité de traitement d'image (13) est conçue pour choisir le contenu d'image (22) parmi plusieurs contenus d'image en fonction de :
- un environnement actuel où le véhicule (10) se trouve et/ou
- un magasin (36), si le véhicule est stationné devant le magasin (36) ou à une distance prédéfinie du magasin (36), et/ou
- une situation de conduite et/ou
- une destination de conduite telle que signalée par un système de navigation.

5. Véhicule (10) selon l'une quelconque des revendications précédentes, dans lequel l'unité de traitement d'image (13) est conçue pour détecter une forme de la au moins une partie corporelle (23) et pour déformer une forme d'un objet représenté par le contenu d'image (22) pour adapter la forme de l'objet à la forme de la au moins une partie corporelle.

6. Véhicule (10) selon l'une quelconque des revendications précédentes, dans lequel l'unité de traitement d'image (13) est conçue pour remplacer un décor de fond (42) de la au moins une image de caméra (21, 21') par un décor artificiel prédéfini (43) dans la au moins une image de sortie (20, 20').

7. Véhicule (10) selon l'une quelconque des revendications précédentes, dans lequel l'unité de traitement d'image (13) est conçue pour fournir une fonctionnalité de capture d'écran en stockant la au moins une image de sortie (20, 20') et/ou en envoyant la au moins une image de sortie (20, 20') à un serveur internet prédéfini, si une entrée d'utilisateur prédéfinie est reçue.

8. Procédé pour faire fonctionner un système d'affichage à caméra (11) d'un véhicule (10), dans lequel un champ de vision (16, 16') d'une caméra (12, 12') du système (11) est dirigé vers une zone de vision (17, 17') et un dispositif d'affichage (14, 14') du système (11) affiche au moins une image de sortie (20, 20') sur la zone de vision (17, 17'), la au moins une image de sortie (20, 20') étant basée sur au moins une image de caméra (21, 21') générée par la caméra (12, 12'),
une unité de traitement d'image (13) du système (11) recevant la au moins une image de caméra (21, 21') provenant de la caméra (12, 12') et effectuant une reconnaissance d'objet pour détecter au moins une personne (19, 19') dans la au moins une image de caméra (21, 21') et générant la au moins une image de sortie (20, 20') sur la base de la au moins une image de caméra (21, 21') en superposant un contenu d'image prédéfini (22) pour manipuler une apparence d'au moins une partie corporelle (23) de la au moins une personne détectée (19, 19') dans la au moins une image de sortie (20, 20'),
- un module de communication (24) du véhicule (10) recevant le contenu d'image (22) provenant d'au moins un serveur de données externe (25), le contenu d'image (22) montrant un produit (35) à transporter sur la au moins une partie corporelle (23) et/ou à porter sur celle-ci, et
- un dispositif de localisation (30) du véhicule (10) déterminant une géo-position actuelle (34) du véhicule (10) et
le véhicule (10) signalant la géo-position actuelle (34) via le module de communication (24) au au moins un serveur de données (25) pour recevoir un contenu d'image spécifique à la localisation (22), et en sorte que le contenu d'image de sortie dépend des données de géo-position reçues.
